# EUROPÄISCHE PATENTSCHRIFT

(11) **EP 0 273 326 B1**
(45) Veröffentlichungstag und Bekanntmachung des Hinweises auf die Patenterteilung: **09.03.1994**
(21) Anmeldenummer: 87118884.3
(22) Anmeldetag: 19.12.1987
(51) Int. Cl.: G01S 13/91, G01S 13/87, G01S 13/76

(54) **System zur Landehilfe für Flugzeuge mit eigenem Bordradar**
Landing-aid system for aircraft having its own on-board radar
Système d'aide à l'atterrissage pour avions comportant leur propre radar de bord

(30) Priorität: 24.12.1986 DE 3644478
(43) Veröffentlichungstag der Anmeldung: 06.07.1988
(73) Patentinhaber: Deutsche Aerospace AG, 81663 München (DE)
(72) Erfinder: Drescher, Roland, Dipl.-Ing.(FH), D-7917 Vöhringen (DE); Jehle, Franz, Dipl.-Ing.(FH), D-7900 Ulm (DE); Och, Günther, Dr., D-7900 Ulm (DE)
(74) Vertreter: Schulze, Harald Rudolf, Dipl.-Ing.

(56) Entgegenhaltungen:
- CH-A- 658 599
- DE-B- 1 016 324
- FR-A- 1 102 295
- FR-A- 2 325 022
- US-A- 2 426 218
- US-A- 2 502 974
- US-A- 2 572 043
- US-A- 2 611 124
- US-A- 3 146 448
- US-A- 3 716 855
- US-A- 3 716 866
- US-A- 3 775 766
- US-A- 3 918 056
- US-A- 3 931 622
- IEEE TRANSACTIONS ON AEROSPACE AND ELECTRONIC SYSTEMS, Band AES-2, Nr. 3, Mai 1966, Seiten 353-359, New York, US; G.M. KIRKPATRICK: "Use of airborne monopulse radar as a low approach aid"
- L'ONDE ELECTRIQUE, Band 52, Nr. 8, September 1972, Seiten 357-361, Paris, FR; J. GENUIST: "Wilm-radar météorlogique et aide à l'atterrissage"

## Beschreibung

Die Erfindung betrifft ein System zur Landehilfe für Flugzeuge mit eigenem Bordradar nach dem Oberbegriff des Anspruchs 1.

Um den Flugverkehr weitgehend wetterunabhängig zu halten, sind insbesondere für den Landeanflug Hilfssysteme unerläßlich. Während auf zivilen Flughäfen im allgemeinen umfangreiche Radareinrichtungen oder aufwendige Landehilfen (ILS,MLS) zur Verfügung stehen oder in absehbarer Zeit eingeführt werden, stellt sich für den militärischen Flugverkehr die Situation ungünstiger dar. Sowohl Landebahnen als auch zugehörige bodengebundene Radar-Landehilfssysteme sind im Ernstfall durch gegnerische Angriffe besonders ausfallgefährdet. Zuverlässige Systeme zur Landehilfe müssen daher auch eine Landung bei schlechtem Wetter, ohne umfangreiche bodengebundene Einrichtungen und auf kurzfristig einrichtbaren Behelfslandebahnen ermöglichen.

Aus der Druckschrift IEEE Transactions on Aerospace and Electronic Systems, Band AES-2, Nr. 3, Mai 1966, Seiten 353-359, New York, US, G.M. KIRKPATRICK: "Use of Airborne Monopulse Radar as a Low Approach Aid" ist für Flugzeuge ein Monopuls Radar bekannt, das als Landehilfe nutzbar ist. Dabei wird eine sogenannte Monopuls Display Improvement (MDI) Technik verwendet, um punktförmige Radarziele, z.B. passive Radarreflektoren und/oder Baken und/oder Transponder, möglichst scharf, das heißt mit möglichst hoher Auflösung, auf einem Radar-Sichtschirm darzustellen. Damit ist es möglich, eine Landebahn für ein Monopuls-Bordradar gut erkennbar zu markieren. Dazu werden beiderseits der Landebahn und parallel zu dieser jeweils drei der erwähnten punktförmigen Radarziele aufgestellt.

Der Erfindung liegt die Aufgabe zugrunde, eine weitere gattungsgemäße Vorrichtung zur Landehilfe von Flugzeugen anzugeben.

Die Erfindung ist im Patentanspruch 1 beschrieben. Die Unteransprüche enthalten vorteilhafte Ausgestaltungen und Weiterbildungen der Erfindung.

Die Erfindung macht vorteilhaften Gebrauch davon, daß die bordeigenen Radarsysteme in Flugzeugen, insbesondere in militärischen Flugzeugen eine hohe Winkelauflösung haben. Die Verbindung eines solchen genauen Bordradars mit zwei bodengebundenen tragbaren Baken ermöglicht die kurzfristige Markierung einer Landebahn an einer beliebigen, zur Flugzeuglandung geeigneten Stelle, beispielsweise einem geraden brückenfreien Autobahnabschnitt oder auf einem teilweise beschädigten Rollfeld.

Das erfindungsgemäße System ist auch für Landungen bei sehr schlechten Wetterverhältnissen geeignet. Die gegenseitige Adressierung von Bordradar und Baken gewährleistet eine sehr hohe Sicherheit gegen zufällige oder absichtliche Störungen. Da die Baken nur bei richtiger Adressierung ein Antwortsignal aussenden, ist auch die Wahrscheinlichkeit der Entdeckung durch gegenerische Maßnahmen sehr gering. Durch Wahl verschiedener Frequenzen für Anfrage und Antwort können Bodenreflexionen keine Antwortsignale vortäuschen. Die Aufstellung der Baken erfordert weder schweres Gerät noch besonders geschultes Personal. Die Ergänzung des bereits vorhandenen Bordradarsystems erfordert nur geringen Aufwand und die Kosten für die beiden Baken als einzige Bodeneinrichtungen sind gering. Da das System auch unabhängig von irgendwelchen Infrastrukturen und damit völlig autonom ist, steht damit ein kurzfristig äußerst preiswert einzurichtendes Landehilfesystem zur Verfügung, das auch bei Ausfall bestehender oder bis zur Einrichtung vorgesehener komplexerer Systeme als Überbrückung eingesetzt werden kann.

Die Erfindung ist nachfolgend anhand von Ausführungsbeispielen unter Bezugnahme auf die Abbildungen noch veranschaulicht. Dabei zeigt
- FIG. 1: die Situation eines Flugzeugs beim Landeanflug in verschiedenen Positionen
- FIG. 2: eine Situationsanzeige in einer Anfangsphase des Landeanflugs
- FIG. 3: eine Situationsanzeige in der Endphase des Landeanflugs
- FIG. 4: den prinzipiellen Aufbau einer Bake

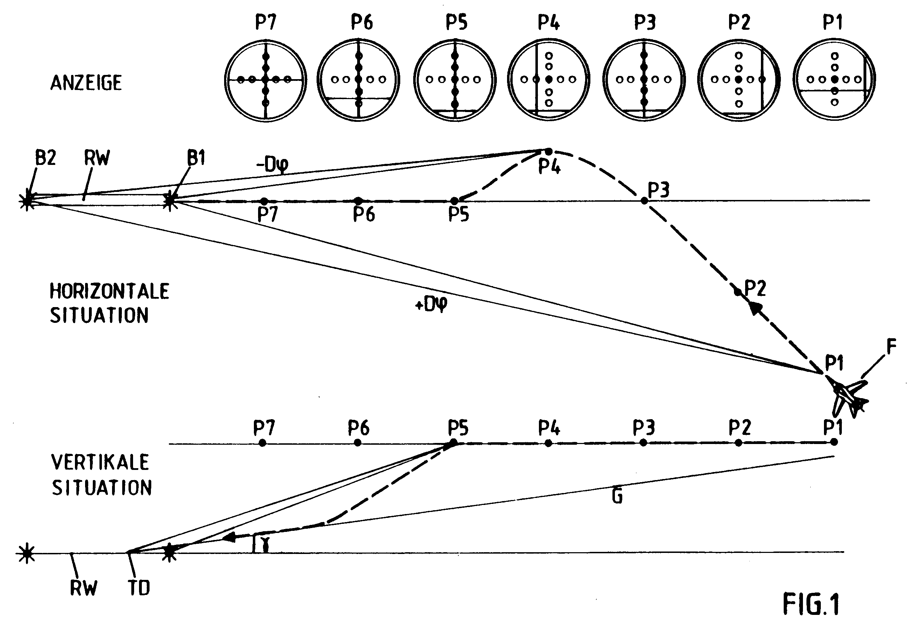

In FIG. 1 sind die horizontale und die vertikale Situation eines im Landeanflug an eine durch Baken B1 und B2 markierte Landebahn RW befindlichen Flugzeugs F in verschiedenen Positionen sowie eine mögliche Anzeigeform für den Piloten dargestellt. In Position P1 hat das Bordradar die Baken bereits erfaßt und den Landemodus eingeleitet. In diesem Modus werden auf einer festgelegten Frequenz f_{FB} kodierte Anfragesignale an die Baken ausgesandt, die ihrerseits wiederum auf einer anderen Frequenz f_{BF} kodierte Antwortsignale aussenden, die vom Bordradar des Flugzeugs aufgenommen und ausgewertet werden. Die Auswertung schließt vorteilhafterweise eine Azimut-Monopuls-Verarbeitung der Signale ein. Die Antwortsignale der beiden Baken können bei von vornherein seitenrichtigem Anflug, z.B. aufgrund zusätzlicher Information von einer Bodenleitstelle, durch ihr zeitlich getrenntes Eintreffen unterschieden werden. Die Baken können dann auch ein einseitiges Richtdiagramm aufweisen, das grob in Richtung des anfliegenden Flugzeugs zeigt, und die Antwortsignale können bei beiden Baken gleich sein, so daß bei der Aufstellung der Baken kein Unterschied beachtet werden muß. Andererseits ist für den Fall, daß die zusätzliche Information über die richtige Anflugrichtung nicht zuverlässig von einer Leitstelle verfügbar ist, es zweckmäßig, die Antwortsignale der beiden Baken unterschiedlich zu kodieren und somit Anfangsbake B1 und Endbake B2 zu unterscheiden. Die beiden Baken müssen dann bei der Aufstellung entweder bereits nach Anfangs- und Endbake unterschieden werden oder Schaltmittel aufweisen, mittels derer die jeweilige Funktion und damit die entsprechende Antwortkodierung einstellbar sind. Das Antennendiagramm der Bakenantennen kann dann ein nach entgegengesetzten Richtungen strahlendes Doppelrichtdiagramm oder auch ein Rundstrahldiagramm sein.

Für den Landeanflug kann ab der Position 1 in FIG. 1 das Bordradar wie in einem Zielverfolgungsmodus immer in Richtung einer Bake, z.B. der Bake B1 nachgeführt werden. Für die fortwährende Bestimmung der Entfernung genügt die Auswertung des Antwortsignals der Bake 1. Die Winkelablage von der virtuellen verlängerten Mittellinie der Landebahn wird durch Vergleich beider Antwortsignale gewonnen. Vorteilhafterweise werden hierzu in einer bei den gebräuchlichen Bordradarsystemen bereits vorgesehenen Monopulsverarbeitung die Differenz- oder Phasensignale für beide Antwortsignale und daraus wiederum die Differenz Dφ der beiden Phasensignale bestimmt. Aus der Polarität von Dφ ergibt sich qualitativ die Ablage der momentanen Flugposition von der verlängerten Mittellinie L der Landebahn, z.B. Dφ positiv (+Dφ in Pos. P1) für Flugpositionen links von L, Dφ negativ (-Dφ bei P4) für Flugpositionen rechts von L.

Aus der Amplitude von Dφ ergibt sich der Ablagewinkel quantitativ. Bei genau auf die Bake B1 ausgerichteter Hauptstrahlrichtung des Monopuls-Summendiagramms ist das Differenzsignal zur Bake B1 gleich Null und die Differenz Dφ gleich dem Differenzsignal aus dem Antwortsignal der Bake B2. Die Messung weiterer, für die Steuerung des Flugzeugs wesentlicher Lageparameter, wie Flughöhe, Geschwindigkeit, Roll-,Gier- und Anstellwinkel des Flugzeugs erfolgt ohne Beteiligung der Baken und wird daher an dieser Stelle als bekannt vorausegestzt.

In gleicher Weise wie für die Bestimmung der azimutalen Ablage der momentanen Flugposition von einer Sollposition kann die Haupstrahlrichtung des Bordradars mit elevationalem Monopulsbetrieb in einem Zielverfolgungsmodus auch in der Elevation der Banke B1 nachgeführt werden. Die vertikale Abweichung der momentanen Flugposition von einer Soll-Position wird aus dem Vergleich des Elevationswinkels, unter dem die Bake B1 erscheint bzw. eines daraus berechneten Soll-Aufsetzpunktes (TD), mit einem Sollgleitwinkel, der z.B. 3° betrage, bestimmt.

Für die Festlegung des idealen Gleitpfads (Sollgleitpfads) G bezüglich der Landebahn sind in FIG. 1 allgemeine Regeln zugrunde gelegt: Der Sollgleitpfad fällt in azimutaler Richtung selbstverständlich mit der Mittellinie der Landebahn zusammen; der gegen die Horizontale gemessene Gleitwinkel soll beispielsweise 3° betragen; der Aufsetzpunkt (Touchdown) TD auf der Landebahn soll beispielsweise in bestimmter Entfernung hinter der Anfangsbake B1 liegen.

Auf der Grundlage dieser Festlegungen und der gemessenen Werte für die relative Lage des Flugzeugs können im Flugzeug ständig der Sollgleitpfad und die relative Lage des Flugzeugs dazu ermittelt und angezeigt werden. Bei der in FIG. 1 skizzierten Anzeigeform sind in einer Anzeige mit im Zentrum der Anzeige gekreuzten Achsen ein vertikaler Anzeigestrich für die azimutale und ein horizontaler Anzeigestrich für die vertikale Ablage des berechneten Sollgleitpfads G von der momentanen Position Pᵢ des Flugzeugs F vorgesehen. In Position P1 liegt G rechts (entsprechend Dφ positiv) und unterhalb von F. Durch die momentane Flugrichtung verringert sich der horizontale Abstand und vergrößert sich der vertikale (P2). Bei P3 liegt das Flugzeug direkt über G, die azimutale Abweichung wird daher Null. Die elevationale Abweichung ist zwar größer als bei P2, die Anzeige hat hierfür aber bereits die Begrenzung erreicht und verändert sich nicht mehr. Da bei P3 die Flugrichtung G azimutal kreuzt, wandert der vertikale Anzeigestrich über die Nullstellung hinaus und zeigt bei P4 an, daß jetzt G links (entsprechend Dφ negativ) von F liegt. Bei P5 sei das Flugzeug dann in azimutaler Richtung auf den Sollgleitpfad eingeschwenkt, so daß der vertikale Anzeigestrich in der Mittenstellung bleibt. Während des folgenden Sinkflugs wandert der horizontale Anzeigestrich zur Mitte hin nach oben (P6), um in der Mittenstellung zu bleiben, wenn der tatsächliche Flugweg des Flugzeugs mit dem Sollgleitpfad G übereinstimmt.

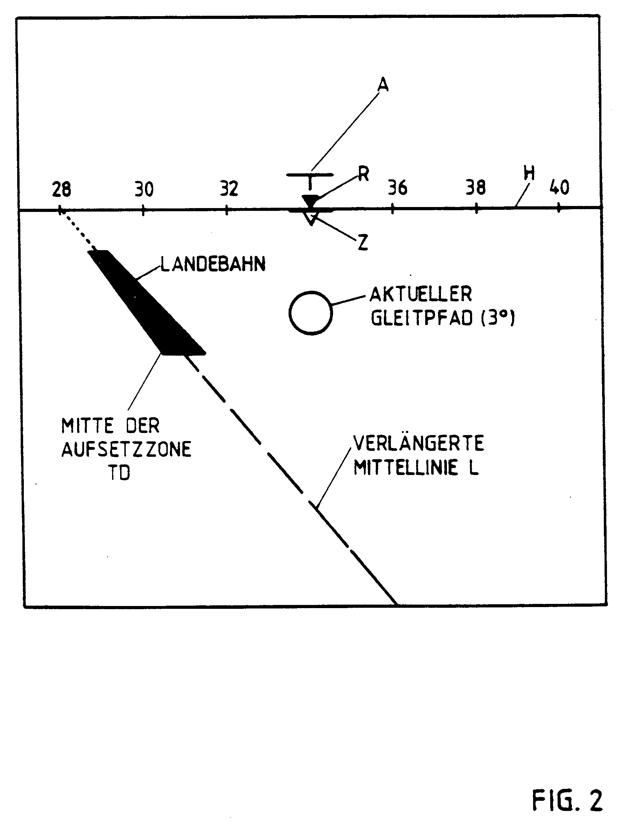

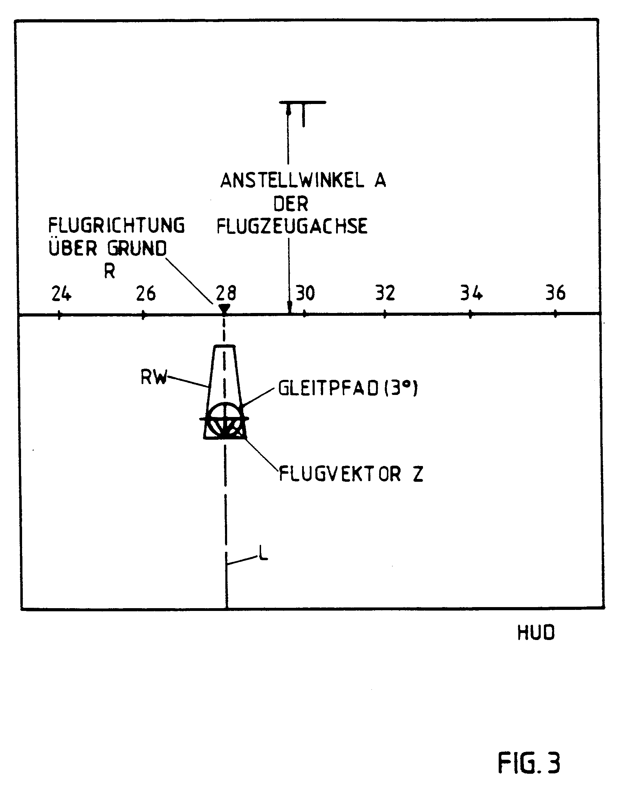

Bei einer vor allem für die Schlußphase des Landeanflugs bevorzugten Darstellung ist eine Blickfeld-Darstellung (Head-Up-Display) vorgesehen, bei welcher die Landebahn symbolhaft in eine Darstellung des Sichtfelds des Piloten eingefügt ist. Die FIG. 2 und 3 zeigen solche Darstellungen für die Positionen P2 bzw. P7. Auf einer künstlichen Horizontlinie H ist beispielsweise die nordbezogene momentane Flugrichtung R über Grund markeirt. Der auf der Horizontlinie liegende Flugvektor Z zeigt an, daß in P2 die Flugbahn horizontal verläuft. Die Markierung für den aktuellen fiktiven Gleitpfad gibt den Ort am Boden an, an welchem das Flugzeug ausgehend von der momentanen Position bei einem Sinkflug unter z.B. 3° Gleitwinkel landen würde. Als wesentliche Größen der Landebahn sind die Mitte der Aufsetzzone TD und die verlängerte Grundlinie L angezeigt.

Die Landebahn ist zusätzlich als schräg-perspektivischer Streifen dargestellt. Diese Anzeige ist zwar aufwendiger, aber durch ihre Ähnlichkeit mit einen realen Gesichtsfeld bei guten Sichtbedingungen wesentlich anschaulicher.

Der Anzeige gemäß FIG. 3, der die Flugposition P7 entspricht, ist zu entnehmen, daß jetzt der Flugvektor mit dem angezeigten Gleitpfad zusammenfällt, daß das Flugzeug sich also unter einem Gleitwinkel von 3° im Sinkflug befindet. Flugvektor- bzw. Gleitpfadmarkierung decken sich auch mit der Mitte der Aufsetzzone, so daß bei Beibehaltung der momentanen Flugrichtung das Flugzeug genau zum vorgesehenen Aufsetzpunkt TD gelangt. Der Anstellwinkel A der Flugzeugachse ist jetzt wesentlich größer als in FIG. 2, da der Pilot bei P7 die Fluggeschwindigkeit u.a. durch Vergrößern des Anstellwinkels verringert, während sich bei P2 das Flugzeug im unverzögerten Horizontalflug befindet. Der Versatz der Flugrichtung R aus der Bildmitte ist ein Hinweis darauf, daß das Flugzeug durch Seitenwind abgetrieben wird und deshalb Flugzeugachse und Flugrichtung azimutal nicht zusammenfallen. Bei den beschriebenen Darstellungsarten (FIG. 1 oder FIG. 2/3) handelt es sich um im Prinzip bekannte Anzeigen, so daß das erfindungsgemäße System problemlos mit bestehenden Anzeigen verknüpft werden kann. Das beschriebene spezielle Flugmanöver mit Positionen P1 bis P7 ist selbstverständlich nicht durch das System zur Landehilfe bedingt, sondern veranschaulicht lediglich die sich bei dem System im Verlauf des Landeanflugs ergebenden Informationen.

Die Baken sind in der Skizze nach FIG. 1 auf der Mittellinie am Anfang und am Ende der Landebahn angeordnet. In gleicher Weise kann auch eine seitliche Anordnung einer oder beider Baken in vereinbartem Abstand von der Mittellinie zweckmäßig sein, z.B. un mit Sicherheit ein Überrollen der Baken zu verhindern. Wichtig ist lediglich, daß die Anordnung der Baken relativ zur Landebahn in den Auswerteeinrichtungen des Flugzeugs zur Berechnung der relativen Lage des Sollgleitwegs bekannt ist.

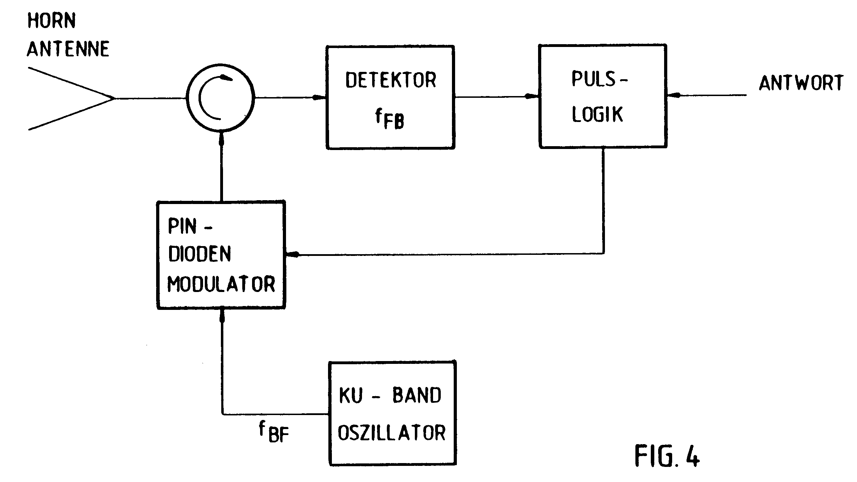

Die FIG. 4 zeigt als Blockschaltbild den prinzipiellen Aufbau einer bei dem erfindungsgemäßen System verwandten Bake. Eine Sende-/Empfangs-Hornantenne ist mit einem Zirkulator zur Sender-Empfänger-Entkopplung verbunden. Im Empfangszweig ist ein auf die Frequenz des Anfragesignals f_{FB} abgestimmter Empfänger angeordnet. Die demodulierten Signale werden in einer Pulslogik daraufhin geprüft, ob es sich um durch festgelegte Kodierung erkennbare Anfragesignale handelt. Gegebenenfalls wird automatisch ein Antwortpulsmuster erzeugt, welches einen im Sendezweig angeordneten PIN-Dioden-Modulator zur Abgabe eines Antwortsignals veranlaßt. Das Antwortsignal hat die von einem Oszillator erzeugte Trägerfrequenz f_{BF}, die von der Frequenz f_{FB} des Anfragesignals verschieden ist.

Das Pulsmuster des Antwortsignals ist im einfachsten Fall unveränderbar festgelegt. Es kann aber auch aus einem festgelegten Teil als Kennung und einem variablen Parameterteil zur Informationsübertragung bestehen, wodurch z.B. besondere Landebedingungen, wie Abstand der Baken von der Mittellinie, gegenseitiger Abstand der Baken, Länge der Landebahn o.ä. an der Bake eingestellt werden können und im Antwortsignal mitübertragen werden.

## Patentansprüche

1. System zur Landehilfe für Flugzeuge, insbesondere für Landungen bei schlechten Sichtverhältnissen und/oder auf Behelfs-Landebahnen, wobei
- ein Bordradar vorhanden ist,
- zur Markierung einer Landebahn (RW) mindestens zwei als aktive Radar-Transponder ausgebildete Baken (B1, B2) so aufgestellt sind, daß ihre Verbindungslinie parallel zu der Mittellinie der Landebahn verläuft,
- das Bordradar zur Aktivierung der Baken zunächst ein durch Frequenz und/oder Kodierung festgelegtes Anfragesignal ausstrahlt,
- das von den Baken aufgenommene Anfragesignal in diesen die Aussendung eines gleichfalls durch Frequenz und/oder Kodierung festgelegten, jedoch von dem Anfragesignal verschiedenen Antwortsignal auslöst und
- eine bordeigene Auswerteschaltung aus den Antwortsignalen die relativen Lagen der Baken und/oder der Landebahn bezüglich der Fluglage und der Position des Flugzeugs ermittelt und zur Anzeige bringt, dadurch gekennzeichnet,
- daß das Bordradar für azimutalen Monopulsbetrieb mit schwenkbarer Hauptstrahlrichtung ausgeführt ist,
- daß die bordeigene Auswerteeinrichtung die azimutale Abweichung der momentanen Flugposition von der Richtung der Landebahn aus dem Differenzsignal (Dφ) der einen Bake (B2) bei auf die andere Bake (B1) ausgerichteter Hauptstrahlrichtung bestimmt,
- daß das Bordradar zusätzlich für elevationalen Monopulsbetrieb ausgerüstet ist und
- daß die bordeigene Auswerteeinrichtung aus der Lage der Baken (B1, B2) einen Soll-Aufsetzpunkt (TD) berechnet und durch Vergleich des Elevationswinkels, unter dem dieser Aufsetzpunkt erscheint, mit einem vorgegebenen Gleitwinkelwert die vertikale Abweichung der momentanen Flugposition von einer Soll-Flugposition bestimmt.

2. System nach Anspruch 1, dadurch gekennzeichnet, daß die Baken (B1, B2) transportabel sind.

3. System nach Anspruch 1 oder 2, dadurch gekennzeichnet, daß zur Stromversorgung der Baken (B1, B2) jeweils batteriegepufferte Solarzellenanordnungen vorgesehen sind.

4. System nach einem der Ansprüche 1 bis 3, dadurch gekennzeichnet, daß Mittel vorhanden sind, mit denen die Landebahn in ihrer relativen Lage bezüglich der Fluglage und -richtung des Flugzeugs in die Lagedarstellung eines Blickfeld-Sichtgeräts (HUD) eingefügbar ist.

5. System nach Anspruch 4, dadurch gekennzeichnet, daß Mittel vorhanden sind, mit denen zusätzlich ein Symbol für den aus der momentanen Fluglage und -richtung extrapolierten Landepunkt einblendbar ist.

6. System nach einem der Ansprüche 1 bis 5, dadurch gekennzeichnet, daß die Antennen der Baken (B1, B2) ein in vorgesehener Anflugrichtung weisendes Richtdiagramm haben.

7. System nach einem der Ansprüche 1 bis 6, dadurch gekennzeichnet, daß in den Baken (B1, B2) Mittel vorhanden sind, die Antwortsignale mit festgelegten Kennungen und einen Informationsteil variablen Inhalts erzeugen, und daß der variable Inhalt aus bei den Baken vorgebbaren Werten bestimmter Parameter der Landeverhältnisse besteht.

8. System nach einem der Ansprüche 1 bis 7, dadurch gekennzeichnet, daß die Antwortsignale der beiden Baken verschieden sind.

## Claims

1. System as landing aid for aircraft, in particular for landings in poor conditions of visibility and/or on makeshift landing strips, wherein
- an on-board radar is present,
- at least two beacons (B1, B2), which are constructed as active radar transponders, are so set up for the marking of a landing strip (RW) that their connecting line runs parallelly to the centre line of the landing strip,
- the on-board radar initially radiates a request signal, which is fixed by frequency and/or coding, for the activation of the beacons,
- the request signal picked up by the beacons initiates in these the emission of a response signal which is likewise fixed by frequency and/or coding, but differs from the request signal and
- an on-board evaluating circuit ascertains and brings to indication the relative positions of the beacons and/or the landing strip with reference to the flight attitude and position of the aircraft, characterised thereby,
- that the on-board radar is constructed for azimuth single pulse operation with pivotable main beam direction,
- that the on-board evaluating equipment ascertains the azimuth deviation of the instantaneous flight position from the direction of the landing strip from the difference signal (Dφ) of the one beacon (B2) when the main beam direction is directed to the other beacon (B1),
- that the on-board radar is additionally equipped for elevational single pulse operation and
- that the on-board evaluating equipment computes a target setting-down point (TD) from the position of the beacons (B1, B2) and ascertains the vertical deviation of the instantaneous flight position from a target flight position by comparison of the elevation angle, at which this setting-down point appears, with a preset value of glide angle.

2. System according to claim 1, characterised thereby, that the beacons (B1, B2) are transportable.

3. System according to claim 1 or 2, characterised thereby, that solar cell arrangements, each floated by a battery, are provided for the current supply of the beacons (B1, B2).

4. System according to one of the claims 1 to 3, characterised thereby, that means are present, by means of which the landing strip in its relative position with reference to the flight attitude and position of the aircraft is insertable into the positional representation of a field-of-view visual display (HUD).

5. System according to one of the claims 1 to 4, characterised thereby, that means are present, by means of which a symbol for the landing point, which is extrapolated from the instantaneous flight attitude and position, is additionally displayable.

6. System according to one of the claims 1 to 5, characterised thereby, that the aerials of the beacons (B1, B2) have a directional diagram pointing in the envisaged direction of flight approach.

7. System according to one of the claims 1 to 6, characterised thereby, that means are present in the beacons (B1, B2) for generating the response signals with fixed identifications and an information part of variable content and that the variable content consists of values, which are presettable at the beacons, of certain parameters of the landing conditions.

8. System according to one of the claims 1 to 7, characterised thereby, that the response signals of both the beacons are different.

## Revendications

1. Système d'aide à l'atterrissage pour avions, destiné en particulier à des atterrissages sous mauvaises conditions de visibilité et/ou sur des pistes d'atterrissage de secours, avec lequel
- l'avion possède un radar de bord,
- pour marquer une piste d'atterrissage (RW), au moins deux balises (B1, B2), réalisées comme des transpondeurs de radar actifs, sont placées de manière que la ligne qui les relie soit parallèle à l'axe de la piste d'atterrissage,
- le radar de bord rayonne d'abord, pour activer les balises, un signal d'appel déterminé par la fréquence et/ou un codage,
- le signal d'appel, reçu par les balises, déclenche dans celles-ci l'émission d'un signal de réponse détermine également par une fréquence et/ou un codage, mais qui diffère du signal d'appel, et
- un circuit d'exploitation embarqué élabore, à partir des signaux de réponse, les positions relatives des balises et/ou de la piste d'atterrissage par rapport à la position de vol, de même que la position de l'avion, et produit leur affichage, caractérisé en ce
- que le radar de bord est conçu pour un fonctionnement mono-impulsion en azimut, avec une direction pivotante du centre de rayonnement,
- que le dispositif d'exploitation embarqué détermine l'écart en azimut de la position de vol momentanée par rapport à la direction de la piste d'atterrisage à partir du signal de différence (D_{φ}) d'une des balises (B2) pendant que la direction du centre de rayonnement est pointée sur l'autre balise (B1),
- que le radar de bord est conçu en plus pour un fonctionnement mono-impulsion en élévation et
- que le dispositif d'exploitation embarqué calcule un point de contact prescrit (TD) avec la piste à partir de la position des balises (B1, B2) et détermine, par la comparaison de l'angle d'élévation sous lequel apparaît ce point de contact avec une valeur prédéterminée de l'angle de descente, l'écart vertical de la position de vol momentanée par rapport à une position de vol prescrite.

2. Système selon la revendication 1, caractérisé en ce que les balises (B1, B2) sont transportables.

3. Système selon la revendication 1 ou 2, caractérisé en ce que des dispositifs à cellules solaires couplés à une batterie d'accumulateurs sont prévus pour l'alimentation électrique des balises (B1, B2).

4. Système selon une des revendications 1 à 3, caractérisé en ce que des moyens sont prévus pour insérer la piste d'atterrissage, sous sa position par rapport à la position de vol et à la direction de l'avion, dans la représentation de la position par un appareil de visualisation à champ visuel (HUD).

5. Système selon la revendication 4, caractérisé en ce que des moyens sont prévus pour insérer en plus un symbole pour le point d'atterrissage, lequel est extrapolé de la position et de la direction de vol momentanées.

6. Système selon une des revendications 1 à 5, caractérisé en ce que les antennes des balises (B1, B2) ont un diagramme directionnel braqué dans la direction prévue pour l'arrivée de l'avion.

7. Système selon une des revendications 1 à 6, caractérisé en ce que des moyens sont prévus dans les balises (B1, B2) pour générer les signaux de réponse avec des identifications fixes et une partie information de contenu variable, et que le contenu variable est formé de valeurs, pouvant être introduites préalablement dans les balises, de certains paramètres se rapportant aux conditions d'atterrissage.

8. Système selon une des revendications 1 à 7, caractérisé en ce que les signaux de réponse des deux balises sont différents.
